# EUROPEAN PATENT APPLICATION

(11) **EP 4 814 867 A1**
(43) Date of publication of application: **30.09.2026**
(21) Application number: 25305417.5
(22) Date of filing: 24.03.2025
(51) Int. Cl.: G06T 7/11, G06T 7/143, G06T 7/187

(54) **COMPUTER-IMPLEMENTED METHOD FOR SELECTING AN INTEREST REGION IN AN IMAGE**

(71) Applicant: Avatar Medical, 75015 Paris (FR)
(72) Inventor: EL BEHEIRY, Mohamed, 75015 Paris (FR)
(74) Representative: Icosa

(57) **Abstract**

The present invention relates to a computer-implemented method (100) for selecting an interest region (20) in an image (18) composed of image elements, comprising:
- receiving (S10) a selection of at least an initial image element;
- initializing (S20) an ensemble of interest image elements;
- defining (S30) an effective number of N walkers and initializing each walker among said N walkers;
- selecting (S40) said interest region (20) in said image (18) for each walker among said N walkers, by iterating a plurality of sub-steps until satisfaction of at least one predefined stopping criteria.

## Description

### FIELD OF INVENTION

The present invention relates to the field of medical image processing.

More specifically, the invention pertains to a computer-implemented method for selecting an interest region in an image.

### BACKGROUND OF INVENTION

Radiologic images such as Magnetic Resonance Imaging (MRI) or Computed Tomography (CT) scans are the baseline source of information for several medical application, such as diagnosis, treatment, or planning. It is often of interest to select regions of interest in medical images for instance for identifying specific regions such as organs or tumors.

A consistent challenge with the task of selecting regions of interest in medical images lies in the fact that regions of interest are computationally difficult to demarcate automatically, due to such factors as heterogeneity of regions of interest in terms of pixel intensity values, noise sources in medical images, the presence of different parts in an image presenting similar pixel intensity values. By selecting regions of interest in medical images, it is meant identifying an ensemble of image elements among image elements of the medical images, that together would correspond to the regions of interest. This identification is meant for applications including, but not limited to, tagging purposes or or for discriminatory displaying purposes.

One object of the present disclosure is to improve the situation.

### SUMMARY

This invention thus relates to a computer-implemented method for selecting an interest region in an image comprising image elements, each of which being associated to at least one feature value, said method comprising:
- receiving S10 a selection of at least one initial image element comprised in said interest region;
- initializing S20 an ensemble of interest image elements associated to said interest region as comprising at least said initial image element;
- defining S30 an effective number of N walkers and initializing each walker among said N walkers by associating it to a current interest image element being said initial image element
- selecting S40 said interest region in said image for each walker among said N walkers, by iterating until satisfaction of at least one predefined stopping criteria:
   - computing a plurality of displacement probabilities, each displacement probability being computed for a displacement from the current interest image element to each neighboring image element, each displacement probability depending on the feature value of said current interest image element, the feature value of said neighboring image element and a damping factor,
      wherein said plurality of displacement probabilities defines a cumulative distribution function taking distribution values within a total interval, each neighboring image element being associated with an interval comprised in said total interval,
   - choosing a distribution value within said total interval,
   - selecting the neighboring image element associated with the interval comprising said chosen distribution value and moving said walker to said selected neighboring image element so that the current interest image element of said walker is said selected neighboring image element,

   - adding to the ensemble of interest image elements said selected neighboring image element,

so that the selected interest region is defined as the ensemble of interest image elements obtained when said at least one predefined stopping criteria is satisfied,
wherein the damping factor is configured to determine dimensions of said interest region.

Advantageously, the method according to the invention allows selecting an interest region in an image and adapting the dimensions of the selection based on the damping factor. The damping factor is thus a parameter allowing adapting and fine-tuning as desired the result of the method for selecting an interest region according to the invention.

In some embodiments, the damping factor is set by a user. Therefore, the result of the method can be adjusted by a user.

In some other embodiments, the damping factor is determined by an optimization process. Therefore, the method can advantageously provide a resulting selected interest image in a completely automated fashion.

In some embodiments, the displacement probabilities are computed by further taking into account a directional parameter associated with a direction, said directional parameter being configured to increase displacement probabilities corresponding to neighboring image elements located in directions within a predefined angle with respect to said direction. Those embodiments are advantageous when the interest region is elongated along a given direction. In this case, one may want to bias the method for selecting so that the N walkers preferably follow a path close to the given direction. An example of elongated interest region is a blood vessel or nerve fiber bundle.

In some embodiments, the probabilities are defined by: ${P}_{\vec{d}} \left(x, y, z\right) = f \left({θ}_{1},{θ}_{2},..{θ}_{m}\right) {e}^{β \left({θ}_{1},{θ}_{2},..{θ}_{m}\right) {\left({∇}_{\vec{d}}\left(ψ\left(I\left(x, y, z\right)\right)\right)\right)}^{α}}$ wherein:
*̅d̅*̅ is a direction of the step of the walk,
*P_{d̅}* is a probability of transition of a walker in the direction *̅d̅*̅,
θ₁, θ₂.. θₘ are hyperparameters,
*f* is a normalization function depending on θ₁, θ₂.. θₘ ,
β is the damping factor depending on θ₁, θ₂.. θₘ ,
*I*(*x, y, z*) is the intensity feature of the image element (x,y,z),
ψ is a function depending on the intensity feature *I*(*x, y, z*),
α is an exponent.

With such a definition of the probabilities, the method according to the invention allows implementing the selection of the interest region by iteratively propagating the selection among image elements with similar intensity features. At the same time, this definition of the probabilities allows flexibility by the introduction of different degrees of freedom such as the function ψ, the hyperparameter θ and the exponent α.

Advantageously, the damping factor β is chosen so that when its value increases, the propensity for a walker to move in the direction *̅d̅*̅ is reduced, and when its value decreases, this propensity is increased.

In some embodiments, when the image is a 3D image, receiving the selection of the initial image element comprises selecting, in a two-dimensional slice of said image, an initial pixel corresponding to a couple of a first coordinate and a second coordinate in said two-dimensional slice. The pixel corresponds to a voxel of the image, of coordinates the first coordinate, the second coordinate and a third coordinate defined according to the two-dimensional slice position in the image along a corresponding third axis.

In some other embodiments, when the image is a 3D image, receiving the selection of the initial image element comprises selecting an initial image element by means of an adapted 3D selection interface or in a virtual reality environment.

In some embodiments, for each walker, said distribution value is chosen randomly.

In some other embodiments, the method further comprises providing a table of predetermined values or a pseudo-random deterministic random-number generator, wherein, for each walker displacement, choosing a distribution value within said total interval comprises choosing a corresponding predetermined value of predetermined values.

In some other embodiments, the method further comprises providing a table of predetermined values or a pseudo-random deterministic random-number generator, wherein, for each walker displacement, choosing a distribution value within said total interval comprises choosing a corresponding predetermined value from said table of predetermined values or using said pseudo-random deterministic random-number generator.

The table of predetermined values comprises predetermined random numbers that define the predetermined values with which the cumulative distribution function is sampled to assure that each walker displacement of a walker, under the same condition, is entirely reproducible. In this manner, in those embodiments, if the method is implemented several times, for each walker, the distribution value that will be chosen will stay the same for any implementation of the method, so that the selected interest region resulting from the implementation of the method will always be the same. As a consequence, in those embodiments, the method is advantageously reproducible. This is of large in the medical field, where it is of importance to provide reproducible methods.

In some embodiments, the image was obtained from an original image of predefined resolution by reducing the resolution of said original image or of parts of said original image, so as to obtain at least one image of lower resolution corresponding to at least one reduced resolution and so that each image element of said at least one downsampled image corresponds to a group of image elements of said original image; the method further comprising, before the step of receiving a selection, receiving, from a user, a selected resolution corresponding to one among said predefined resolution and said at least one reduced resolution,
wherein the image is the image among the original image and the at least one image of lower resolution corresponding to said selected resolution,
wherein said selected interest region corresponds to an ensemble of image elements of said original image corresponding to the union of all groups of image elements of said original image corresponding to all image elements of said selected interest region,
the method further comprising displaying said ensemble overlaid on the original image.

This provides the advantage of allowing selection of larger regions of an original image, such as full organs with a smaller number of interactions from a user (through the use of the proxy of a version of lower resolution of this original image), while keeping a predefined number of iterations when implementing the present method and the corresponding accuracy.

In some embodiments, said input image was obtained from an original image of predefined resolution by reducing the resolution of said original image or of parts of said original image, so as to obtain at least one image of lower resolution having reduced resolution, and so that each image element of said at least one image of lower resolution corresponds to a group of image elements of said original image,
wherein said at least one image of lower resolution is defined as input image (18),so that said selected interest region corresponds to an ensemble of image elements of said original image corresponding to the union of all groups of image elements of said original image corresponding to all image elements of said selected interest region.

In some embodiments, the method further comprises:
- receiving a click or stroke on at least one two-dimensional slice associated to said image or on said image;
- determining additional interest image elements based on said click or said stroke;
- updating said interest region by adding said additional interest image elements to said ensemble of interest image elements.

In some of the previous embodiments, the click or the stroke defines a working volume, and determining additional interest image elements based on said click or stroke comprises determining interest image elements within said working volume comprising at least one neighboring voxel not comprised in said ensemble of interest image elements, said at least one neighboring image element being determined as an additional interest element.

Those embodiments advantageously give the possibility to a user to fine-tune the resulting selected interest region obtained with the method. For instance, the resulting selected region may be annotated or imperfections in the resulting selected region may be manually corrected such as holes in the resulting selected interest region.

In some embodiments, the method further comprises:
- determining a subset of interest image elements in said ensemble of interest image elements that comprise at least one neighboring image element outside said ensemble of interest image elements,
- extending or shrinking the selected interest region by adding said neighboring image elements or removing said subset of interest image elements.

Those embodiments allow either providing boundaries of the resulting selected interest region or smoothing the contour of the resulting selected interest region.

In some embodiments, the method further comprises:
- counting a number of interest image elements within said ensemble of interest image elements,
- determining a surface or a volume of said interest region based on said number of interest image elements.

For instance, the surface of the volume is a numerical value that can be saved in a memory or exported.

In some embodiments, the selected interest region is used as an input for an algorithm configured to optimize parameters of a ray-based algorithm to create a volume rendering of the image.

In some embodiments, the method further comprises saving said interest region as a binary mask.

Therefore, advantageously, the binary mask can be used for subsequent tasks such as the creation of a mesh and an associated 3D model file (tessellation). In combination with the original image, binary masks can be used as semantic labels to create educational contents or constitute databases to create automatic labeling machine learning algorithms.

In some embodiments, the method further comprises exporting said interest region to create a 3D model file, for instance STL, OBJ or the like. This provides the advantage to manipulate in a CAD software the obtained 3D model of the resulting selected interest region.

In some embodiments, the method further comprises displaying said interest region on said image and/or said two-dimensional slice, wherein each interest image element of said interest region is represented with a predetermined displaying characteristic.

In some embodiments, the input image is a medical image and said interest region is one among a target organ, a vessel, a tumor.

In some embodiments, the at least one predefined stopping criteria comprises achieving an effective number of iterations, said method comprising an additional preliminary step composed of:
a) obtaining a test number of walkers or a test number of iterations and optionally an updated value of damping factor,
   wherein said test number of walkers is equal or reduced from said effective number of walkers and/or said test number of iterations is smaller than said effective number of iterations,
b) implementing steps S10, S20, S30 and S40 with either said test number of walkers or by iterating step S40 a number of times equal to said test number iterations, with said updated value of damping factor being used as said damping factor, in a non-persistent fashion where the interest image elements are not saved,
c) displaying as an overlay to the image in real time as a user changes at step (S10) the selected initial image element through a user interface displaying the image and a selection tool,
d) repeating a), b) and c) until a satisfaction criteria is met.

In some embodiments, the at least one predefined stopping criteria comprises achieving an effective number of iterations, said method comprising:
a) an additional preliminary, obtaining a test number of walkers or a test number of iterations and optionally an updated value of damping factor,
   wherein said test number of walkers is equal or inferior to said effective number of walkers and/or said test number of iterations is inferior than said effective number of iterations,
b) implementing steps S10, S20, S30 and S40 with either said test number of walkers or by iterating step S40 a number of times equal to said test number iterations, with said updated value of damping factor being used as said damping factor, in a non-persistent fashion where the interest image elements are not saved,
c) displaying as an overlay to the image in real time as a user changes at step (S10) the selected initial image element through a user interface displaying the image and a selection tool,
d) repeating a), b) and c) until a satisfaction criteria is met.

Advantageously, those embodiments allow optimizing the first step of selecting at least one initial image element as well as the determination of the damping factor, therefore adjusting the resulting selected method as wished.

All possible combinations of the previously described embodiments are part of the present disclosure.

In addition, the disclosure relates to a computer program product comprising instructions which, when the program is executed by a computer, cause the computer to carry out the methods compliant with any of the above embodiments.

The present disclosure further relates to a computer-readable storage medium, comprising instructions which, when executed by a computer, cause the computer to carry out the methods compliant with any of the above embodiments.

The present disclosure further relates to a non-transitory program storage device (i.e. computer-readable storage medium), readable by a computer, tangibly embodying a program of instructions executable by the computer to perform the computer-implemented methods, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM) or a Flash memory, a portable CD-ROM (Compact-Disc ROM).

### DEFINITIONS

In the present invention, the following terms have the following meanings:

The terms **"adapted"** and **"configured"** are used in the present disclosure as broadly encompassing initial configuration, later adaptation or complementation of the present device, or any combination thereof alike, whether effected through material or software means (including firmware).

The term **"processor"** should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

The expression **"adjacent pixels"** designates two pixels that share a common edge or vertex in a digital image. In a standard rectangular pixel grid, adjacency is typically defined in two ways:
- 4-connectivity (edge-adjacency): Two pixels are adjacent if they share a common edge (left, right, above, or below).
- 8-connectivity (corner-adjacency): Two pixels are adjacent if they share either a common edge or a common corner (diagonal neighbors included).

The expression **"adjacent voxels"** designates two voxels in a 3D image that share a common edge or vertex.

The expression **"neighboring element"** designates either one of two adjacent pixels or one of two adjacent voxels.

### BRIEF DESCRIPTION OF THE DRAWINGS

**Figure 1** is a schematic representation of a device configured to implement the method according to embodiments of the present invention.
**Figure 2** is a is a schematic representation of a processing unit of the device of Figure 1.
**Figure 3** is an example of a flow chart of the method for selecting an interest region in an image according to several embodiments of the present disclosure.
**Figure 4** is an example of sub-steps that can be iterated during a step of selecting an interesting region represented on Figure 3.
**Figure 5** is an example of a cumulative distribution function according to some embodiments of the present disclosure.
**Figure 6A** (which is in color) and **Figure 6B** (which is the black and white version of **Figure 6A****)** represents a view of a user graphical interface of the device of Figure 1 where an example of interest region to be selected is represented.
**Figure 7** **A** (which is in color) and **Figure 7B** (which is the black and white version of **Figure 7A****)** represents a view of a user graphical interface of the device of Figure 1 where another example of interest region to be selected with the method according to the present disclosure is displayed on an input image.
**Figure 8** **A** (which is in color) and **Figure 8B** (which is the black and white version of **Figure 8A****)** represents a view of a user graphical interface of the device of Figure 1 where an input image corresponding to a downsampled version of an original image, the original image and a corresponding selected interest region are displayed.
**Figure 9** **A** (which is in color) and **Figure 9B** (which is the black and white version of **Figure 9A****)** represent a view of a user graphical interface of the device of Figure 1 where an input image corresponding to a downsampled version of an original image, the original image and two corresponding selected interest region are displayed.
**Figure 10** **A** (which is in color) and **Figure 10B** (which is the black and white version of **Figure 10A****)** represents a view of a user graphical interface of the device of Figure 1 where boundary elements of the interest region of Figure 7 are displayed.
**Figure 11** **A** (which is in color) and **Figure 11B** (which is the black and white version of **Figure 11A****)** represents a view of user graphical interface of the device of Figure 1 where additional interest image elements corresponding to the interest region of Figure 7 are displayed.
**Figures 12A-12C** are examples of 3D models relating to the interest region of Figure 7 that can be exported with the method according to the present disclosure.
**Figure 13** is an example of a flowchart representing sub-steps of an additional preliminary step of the method according to the present disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

This invention relates to a computer-implemented method for selecting an interest region 20 in an image being composed of image elements each of which being associated to at least one feature value.

By "selecting", it is meant identifying an ensemble of image elements in the image that define the interest region 20 within the image. This identification is meant for applications such as, but not limited to, tagging purposes or discriminatory displaying purposes (such as coloring the interest region 20).

In some embodiments, the input image is a medical image and the interest region 20 is one among a target organ, a vessel, a tumor.

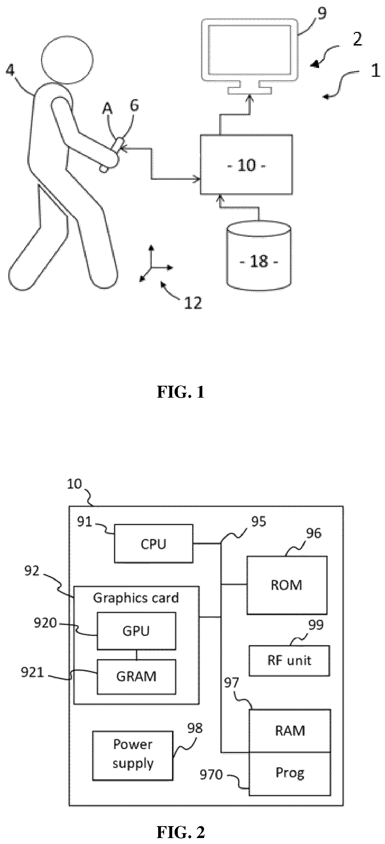

This method may be implemented by a device 1 as illustrated in Figure 1.

**Figure 1** is a schematic representation of a device 1 configured to implement embodiments of a method for selecting an interest region 20 in an image.

The device is advantageously an apparatus, or a physical part of an apparatus, designed, configured and/or adapted for performing the mentioned functions and produce the mentioned effects or results. In alternative implementations, the device is embodied as a set of apparatus or physical parts of apparatus, whether grouped in a same machine or in different, possibly remote, machines. The device may for example have functions distributed over a cloud infrastructure and be available to users as a cloud-based service, or have remote functions accessible through an API ("application programming interface").

The device comprises a user graphical interface 2 including at least one display device 9 configured for displaying at least one input image 18, a controller 6 for interacting with the user graphical interface 2 and a virtual scene represented in the user graphical interface 2, and at least one processor 10 configured for processing data received from the controller 6 and for controlling the at least one display device 9, and for carrying out the method for selecting an interest region 20 in an image.

The controller 6 is configured so that a user 4 interacts with the user graphical interface 2. The user 4 can be a doctor or any other health professional.

In some embodiments, the controller 6 is configured so that the user 4 can select a portion of the virtual scene displayed by the user graphical interface2.

The controller 6 may also be configured to acquire a current position of a predetermined user point A, of the user 4, in a predetermined user coordinate system 12.

The predetermined user coordinate system 12 is, for instance, fixed with respect to the user's environment. The predetermined user coordinate system 12 uses one or more numbers, or coordinates, to uniquely determine the position of points or other geometric elements in the user's environment.

The controller 6 may include a handheld motion tracking sensor, thereby allowing the user 4 to interact with the virtual scene using hand gestures. In this case, the user point A may be a point of the motion tracking sensor. The virtual scene may be represented in the user graphical interface 2, more specifically the virtual scene may be displayed on the at least one display device 9, which can be a 2D or 3D display device as will be described below. More in details, the controller 6 may be equipped with sensors (like accelerometers and gyroscopes) that enable the method to track its position and orientation in 3D space. The method may also relay on the use of external sensors or cameras to enhance tracking accuracy of the controller 6.

The controller 6 may also include other devices, such as a touch screen or a trackpad, a game controller, a mouse and/or a keyboard, thereby further allowing the user 4 to interact with the virtual scene as will be explained later. The virtual scene may be represented in the user graphical interface 2, more specifically the virtual scene may be displayed on the at least one display device 9, which, in this case, is preferably a 2D display device.

The controller 6 may further include buttons and/or switches configured to allow the user 4 to interact with the virtual scene. Such buttons and/or switches may be included in the handheld motion tracking sensor, or may be included in a separate device of the controller 6, such as the touch screen, game controller, mouse and/or keyboard mentioned above.

Particularly, when the virtual scene is displayed on a 3D display device such as a virtual reality headset, the controller 6 may include a 3D controller or a joystick connected to the virtual reality headset.

Preferably, the controller 6 is configured to allow the user 4 to input (for example through the buttons and/or switches) specific instructions, such as an object display instruction, an object shifting instruction, a transformation instruction, or a selection of a portion of the virtual scene displayed by the user graphical interface 2. Such instructions advantageously allow the user 4 to add and/or manipulate 3D objects in the virtual scene, as will be described below.

The controller 6 may also be configured to allow the user 4 to manipulate (e.g., to rotate and/or to zoom in on or out of) 3D objects in the virtual scene, and/or to change a direction along which the user 4 views the virtual scene displayed by the at least one display device 9.

Alternatively, or in addition, the controller 6 includes virtual buttons displayed in the virtual scene to allow the user 4 to interact with the virtual scene, and 3D objects in the virtual scene.

As mentioned previously, the at least one display device 9 is configured to display the virtual scene, that will be described below.

The at least one display device 9 may include a screen, as shown on **Figure 1****.** The nature of the at least one display device 9 will depend on the embodiments.

In some embodiments, the at least one display device 9 may be a 2D display device such as: a computer monitor, a tablet, a smartphone, or a projection screen. Despite the inherent limitation of representing a three-dimensional object in a two-dimensional space, 2D display devices have many advantages, among, for example:
- Compatibility with existing hardware and software platforms. Displaying a 3D model on these devices allows for seamless integration into existing workflows without the need for specialized hardware or software.
- Accessibility to a broad audience, including healthcare professionals, patients, researchers, and educators. By presenting 3D models on familiar devices, such as desktop computers or mobile devices, information can be easily shared and accessed across different settings and user demographics.
- Cost-Effectiveness compared to specialized 3D display devices. This affordability enables broader adoption of 3D visualization technologies across healthcare organizations and educational institutions.
- Interactivity, even if 2D display devices lack the immersive capabilities of dedicated 3D displays, they still offer interactive features such as touchscreens, mouse input, and gesture controls. Users can interact with 3D models on 2D displays by rotating, zooming, and manipulating the view, enhancing their understanding and engagement with the content.

In those embodiments, the controller 6 may advantageously include a mouse and/or a keyboard working as previously described, thereby further allowing the user 4 to interact with the virtual scene.

In some other embodiments, the at least one display device 9 may be a 3D display device such as a stereoscopic 3D monitor, an auto stereoscopic 3D display, a virtual reality - VR - headset, an augmented reality - AR - device, or a 3D holographic display. One of the most significant advantages of 3D display devices is the ability to convey depth perception, providing users with a more realistic and immersive viewing experience, especially for the positioning of graphical landmark. Furthermore, by presenting volumetric data in three dimensions, users can visualize internal structures from multiple angles and perspectives, enabling a more comprehensive understanding of the patient's anatomy and pathology. Compared to 2D display devices, viewing a 3D model on a dedicated 3D display provides users with a better sense of spatial awareness and orientation. This enhanced spatial perception is particularly beneficial for surgical planning where precise anatomical localization and spatial relationships are critical.

In those embodiments, the controller 6 may advantageously include a handheld motion tracking sensor working as previously described, thereby allowing the user 4 to interact with the virtual scene using hand gestures.

The at least one processor 10 is connected to each of the controller 6, the user graphical interface 2 and the at least one display device 9.

The at least one processor 10 corresponds, for example, to a workstation, a laptop, a tablet, a smartphone, programmable logical device (e.g., FPGA) for on-board calculation or a head-mounted display (HMD) such as a virtual reality headset.

As shown on **Figure 2****,** the at least one processor 10 may comprise the following elements, connected to each other by a bus 95 of addresses and data that also transports a clock signal:
- a microprocessor 91 (or CPU);
- a graphics card 92 comprising several Graphical Processing Units (or GPUs) 920 and a Graphical Random Access Memory (GRAM) 921; the GPUs are quite suited to image processing due to their highly parallel structure;
- a non-volatile memory of ROM type 96;
- a RAM 97;
- a power supply 98; and
- a radiofrequency unit 99.

Alternatively, the power supply 98 is external to the at least one processor 10.

The controller 6 is, for instance, connected to at least part of the aforementioned modules, for instance through the bus 95.

Part of the user graphical interface 2 is, for instance, connected to at least part of the aforementioned modules, for instance through the bus 95.

The at least one display device 9 is connected to the graphics card 92, for instance through a suitable interface. For instance, a cable can be used for tethered transmissions, or the RF unit 99 can be used for wireless transmissions.

Each of memories 97 and 921 includes registers, which can designate in each of the memories, a memory zone of low capacity (some binary data) as well as a memory zone of large capacity (enabling a whole program to be stored or all or part of the data representative of data calculated or to be displayed). Also, the registers represented for the RAM 97 and the GRAM 921 can be arranged and constituted in any manner. Each of them does not necessarily correspond to adjacent memory locations and can be distributed otherwise (which covers notably the situation in which one register includes several smaller registers).

When switched-on, the microprocessor 91 loads and executes the instructions of the program 970 contained in the RAM 97 to allow operation of the visualization device 2 in the fashion described in the present disclosure.

As will be understood by a skilled person, the presence of the graphics card 92 is not mandatory, and can be replaced with entire CPU processing and/or other implementations.

The device 1 is configured to receive as input at least one input image 18 comprising an interest region 20 that needs to be selected. The at least one input image 18 may be at least one 3D image or one 2D image.

In some embodiments, the at least one input image 18 is representative of at least one portion of a patient's body and the interest region 20 is an anatomical structure of interest chosen among a target organ, a vessel, a tumor and the like.

In those embodiments, when the at least one input image 18 is at least one 3D image, the at least one 3D image of the portion of the subject's body may had been previously acquired by one of the following imaging techniques: CT scan ("Computed Tomography scan") images, PET ("Positron Emission Tomography"), MRI ("Magnetic Resonance Imaging"), or cone beam CT. Alternatively, the device may be configured to receive as input 2D images 18 of the portion of the subject's body, and then reconstruct via the at least one processor 10, from the received 2D images, the at least one 3D image.

In those embodiments, when the at least one input image 18 is at least one 2D image, the at least one 2D image had been previously obtained from a CT scan ("Computed Tomography scan"), PET ("Positron Emission Tomography") images, MRI ("Magnetic Resonance Imaging"), or cone beam CT. The one or more 2D images may be 2D slices (i.e., cross-sectional images) of the body taken along a specific plane using one of these imaging technologies.

The at least one input image 18 is composed of image elements, each of which associated to at least one feature value. In other words, the input image 18 is defined as the ensemble of image elements.

When the at least one input image 18 is a 3D image, the image elements are voxels, each defined by a triplet of coordinates and dimensions (comprising a height, a width and a length).

When the at least one input image 18 is a 2D image, the image elements are pixels, each defined by a couple of coordinates and dimensions (comprising a width and a length).

In some embodiments, by feature value, it is meant an intensity value of the image elements of a raw version of the input image 18, meaning that the intensity value of the image elements has undergone any pre-processing step. This intensity value can also be referred to as raw intensity value.

In some embodiments, by feature value, it is meant a grey level value of the image elements of a raw version of the input image, meaning that the grey level value of the image elements has undergone no pre-processing step. This grey level value can also be referred to as raw grey level value.

In some embodiments, by feature value, it is meant a value resulting from a transformation of a raw intensity value or a raw grey level value after the input image 18 has undergone a processing step. Many transformations of the raw intensity value or raw grey level can be applied for various purposes such as denoising, compression, geometry or shape identification, including but not limited to: log transformation, square-root transformation, reciprocal transformation, polynomial features, convolution filters, machine-learning based transformation.

The computer-implemented method 100 for selecting an interest region 20 in an input image 18 will be now described. In the computer-implemented method 100 according to the invention, a so-called damping factor is used, that advantageously allows adjusting the result of the selection. In other words, the damping factor is configured to determine dimensions of the resulting selected interest region 20. The impact of the damping factor during the implementation of the method 100 will be further explained. According to one example, the input image 18, with the at least one interest region 20 to be selected, is displayed on the user graphical interface 2, more specifically on the display device 9.

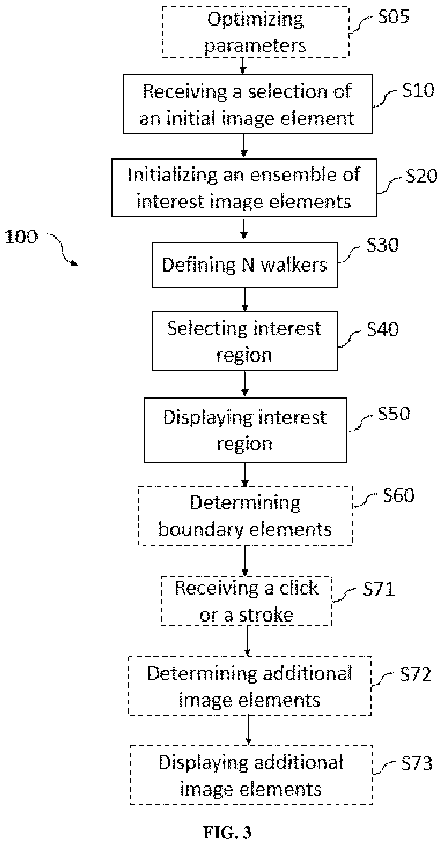

**Figure 3** is an example of flow chart of the method 100.

In a first step S10, a selection of at least one initial image element comprised in the interest region 20 is received.

In some embodiments, the selection is performed by the user 4 by means of an interaction with the user graphical interface 2 via the controller 6. As previously described the controller 6 can be of one among several types including (in a non-limiting manner) a handheld motion tracking sensor, a touchscreen, a mouse, a trackpad, a game controller, a mouse and/or a keyboard.

When the input image 18 is a 2D image, the controller 6 is advantageously a mouse, allowing for a user to select the at least one initial image element by clicking on the input image 18.

In some embodiments, when the input image 18 is a 3D image, one of the 2D slices comprised of the input image is also displayed on the user graphical interface 2, simultaneously or not. The 2D slice may be associated to a first coordinate (e.g., z axis if the 2D slice is an axial slice) in a reference frame of the input image 18. In this case, the selection of the at least one initial image element may comprise selecting a pixel referred to as initial pixel in the 2D slice. The initial pixel corresponds to a couple of a second coordinate and a third coordinate in the 2D slice, further associated to the first coordinate, so as to be associated with a corresponding voxel in the input image 18.

In one embodiment, where the input image is a 2D image, the user selects directly the at least one initial image element (i.e., pixel) from said 2D image, no third coordinates being needed.

In a second step S20, an ensemble of interest image elements associated to the interest region 20 to select is initialized as comprising the at least one initial image element resulting from the selection of the first step S10.

In a third step S30, a number of N walkers is defined, where N is a positive natural number. The number N may be equal or superior to 1, or equal or superior to two, three, etc. Each walker is associated to a current interest image element (i.e., the current interest image element of the walker representing its position in the input image 18 a current moment). The N walkers are initialized by defining each walker current interest image element at the initial time t0 as one of the at least one of the initial image element resulting from the selection of the first step S10.

A walker refers to a mathematical model in which a point (or "walker") moves step by step in a random manner across the input image 18. In the context of the present invention, a walker algorithm assigns labels to image elements (e.g., pixels or voxels) based on probabilistic paths taken by the walkers. As will be described in more detail in the following paragraph, each walker moves according to transition probabilities, which are typically influenced by image element values similarities and spatial proximity. The probability that a walker starting from a given image element reaches a predefined seed region determines the final selected region of interest 20.

In the present invention, the random walker may be implemented by using a random or pseudo-random walk algorithm, as will be detailed below.

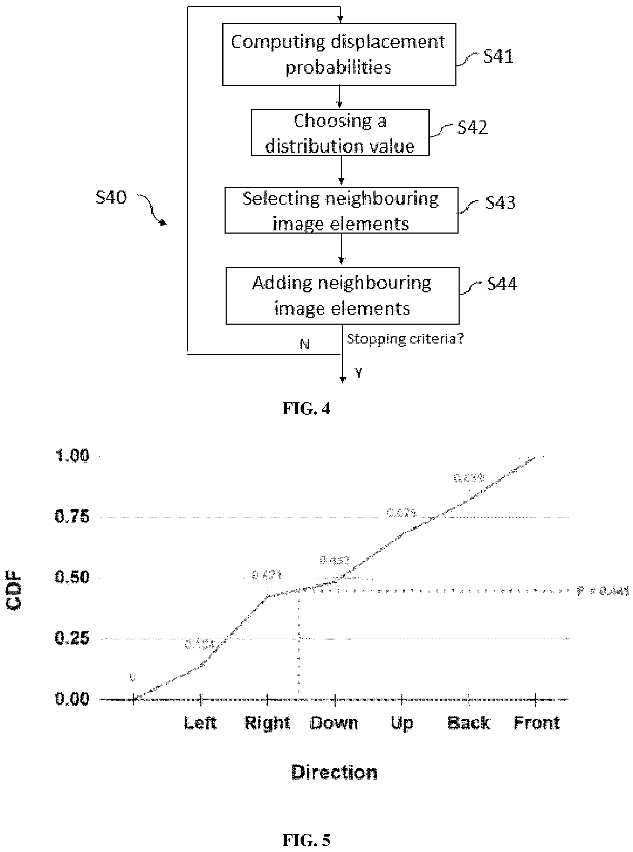

The method 100 comprises a fourth step S40 comprising selecting said interest region (20) in said image for each walker among said N walkers. This selection is obtained by implementing a loop comprising several sub-steps performed by iterating the sub-steps until satisfaction of at least one predefined stopping criteria. The sub-steps of step S40 are illustrated on **Figure 4****.**

The at least one predefined stopping criteria can be a maximum number of iterations of the loop (e.g. the number of walk displacements). In another example, the at least one predefined stopping criteria can be a cost associated with the walk trajectory. In another example, the predefined stopping criteria can be the inclusion in the interest region of an image element previously labeled as stopping element by the user.

In a first sub-step S41 of the loop of S40, for each walker among the N walkers, a plurality of displacement probabilities are computed. Each of the displacement probabilities corresponds to a probability for the corresponding walker to move from its associated current interest image element to a neighboring image element.

By neighboring image element, it is meant an image element that is adjacent to the current interest image element. When the input image 18 is a 3D image, a neighboring image element corresponds to a neighboring voxel that shares at least one common face with the current voxel. When the input image 18 is a 2D image, a neighboring image element corresponds to a neighboring pixel that shares at least one common edge with the current pixel.

When the input image 18 is a 3D image, the image elements are voxels, and, for each walker, a number of 6 displacement probabilities are computed, corresponding to a displacement of the walker to the neighboring voxels to the left, to the right, in front, behind, upwards, or downwards the current voxel.

When the input image 18 is a 2D image, the image elements are pixels, and, for each walker, a number of 4 displacement probabilities are computed, corresponding to a displacement of the walker to the neighboring pixels to the left, to the right, upwards, or downwards the current pixel.

In some embodiments, the displacement probabilities depend on the feature value of the current interest image element, on the feature value of the neighboring image element for which the displacement probability is computed and on the damping factor previously evoked.

In some embodiments, the displacement probabilities are computed using a normalization function of a hyperparameter and nonlinear exponential function applied to a transformed version of the input image 18.

In some embodiments, the displacement probabilities are computed according to the following expression: ${P}_{\vec{d}} \left(x, y, z\right) = f \left({θ}_{1},{θ}_{2},..{θ}_{m}\right) {e}^{β \left({θ}_{1},{θ}_{2},..{θ}_{m}\right) {\left({∇}_{\vec{d}}\left(ψ\left(I\left(x, y, z\right)\right)\right)\right)}^{α}}$ where *̅d̅*̅ represents the displacement direction, *P_{d̅}* represents the probability that a walker located at a position (*x, y, z*), corresponding to one image element, moves in the direction *d̅, θ*₁, *θ*₂ , .. *θₘ* are hyperparameters, f is a function depending on *θ*₁, *θ*₂ ,..*θₘ* defining a normalization factor, *β*(*θ*₁, *θ*₂ ,.. *θₘ*) is the damping factor previously evoked, *I*(*x, y, z)* represents the image element feature, *ψ* is a function, ∇*_{d̅}* represents the gradient in the direction *̅d̅*̅, and *α* is an exponent.

As an example, displacement into an image element that has already been explored can be avoided by decreasing the transition possibility to said element, embodied with the damping factor *β*(*θ*₁, *θ₂* , .. *θₘ*)

When the input image 18 is a 3D image, Equation (1) can separate and simplify into six equations, for six displacement directions from a current voxel of coordinates (x,y,z): ${P}_{left} \left(x, y, z\right) = {e}^{\frac{{I}_{x , y , z} - {I}_{x - 1 , y , z}}{λ}}$ ${P}_{right} \left(x, y, z\right) = {e}^{\frac{{I}_{x , y , z} - {I}_{x + 1 , y , z}}{λ}}$ ${P}_{down} \left(x, y, z\right) = {e}^{\frac{{I}_{x , y , z} - {I}_{x , y - 1 , z}}{λ}}$ ${P}_{up} \left(x, y, z\right) = {e}^{\frac{{I}_{x , y , z} - {I}_{x , y + 1 , z}}{λ}}$ ${P}_{back} \left(x, y, z\right) = {e}^{\frac{{I}_{x , y , z} - {I}_{x , y , z - 1}}{λ}}$ ${P}_{front} \left(x, y, z\right) = {e}^{\frac{{I}_{x , y , z} - {I}_{x , y , z + 1}}{λ}}$ where *ψ* is the identity function; *β*(*θ*₁, *θ*₂ , .. *θₘ*) the damping factor is constant and equal to $\frac{1}{λ}$; *f*(*θ*₁, *θ*₂ ,.. *θₘ*) =1.

As can be deduced from Eq. (2a) to (2f), the damping factor $\frac{1}{λ}$ allows adjusting the displacement probability distribution. The smaller the value of *λ*, the more likely the walker will stay in an image element of similar pixel feature to its current position.

The plurality of displacement probabilities defines a cumulative distribution function taking values referred to as distribution values within a total interval. A cumulative distribution function of a random variable X may be typically an increasing function taking values between 0 and 1 and defined over an ensemble of values taken by the variable X. Generally, when the ensemble of values taken by the random variable X is countable and finite, one sub-interval corresponds to each value taken by the variable X, so that all the sub-intervals form by union the interval [0,1].

As a consequence, individual intervals (or sub-intervals) within the total interval are each associated to one neighboring image element, the distribution value of which is comprised within the corresponding individual interval.

In some embodiments, the cumulative distribution function is a piecewise linear function. **Figure 5** shows an example of a graphical representation of the cumulative distribution in the case where the input image is a 3D image and 6 neighboring voxels are considered, and where the displacement probabilities are defined by Equations (2a) to (2f). The cumulative distribution function is an increasing function. The total interval is [0,1].

In a second sub-step S42, for each walker, a distribution value is chosen within the total interval.

In some embodiments, the distribution values are randomly chosen.

In some other embodiments, the distribution values are chosen in a pseudo-random manner.

In a third sub-step S43, for each walker, the neighboring image element associated with the individual interval comprising the chosen distribution value is selected and the walker is moved to the selected neighboring element. The current interest image element for the walker is updated to be the selected neighboring image element.

In a fourth sub-step S44, for each walker, the selected neighboring image element is added to the ensemble of interest image elements.

In some embodiments, the at least one predefined stopping criteria comprises reaching a predetermined number of iterations.

At the end of the fourth step S40, i.e., when the at least one predefined stopping criteria is satisfied, the selected interest region 20 is defined as the ensemble of interest image elements (i.e., the ensemble of interest image elements comprising all the image elements on which the walker(s) had passed through).

In some embodiments, the damping factor is set by the user 4.

In some other embodiments, the damping factor is determined during an additional preliminary step S05 that will be further described.

In some embodiments, the N walkers are random walkers and are configured to traverse, during the implementation of method 100, a path determined by a random walk process, wherein each walker follows probabilistic transitions influenced by predefined criteria, such as spatial proximity and/or feature similarity, in accordance with a random walker algorithm.

In some other embodiments the N walkers are pseudo-random walkers and are configured to traverse, during the implementation of method 100, a path determined by a pseudo-random walk process, wherein each walker follows probabilistic transitions influenced by predefined criteria, such as spatial proximity and/or feature similarity, in accordance with a pseudo-random walker algorithm that will be described in detail in the following paragraphs. In those embodiments, the result of the selection of the interest region 20 obtained through the implementation of the method 100 is advantageously reproducible.

In some embodiments, when the N walkers are pseudo-random walkers, the method 100 further comprises, before the fourth step S40, an additional step of receiving N matrices of predetermined values. The predefined values in each matrix are randomly selected in the interval [0,1], so that all matrices are different. Each matrix corresponds to one walker among the N walkers.

In some of those embodiments, the N matrices have a size equal to the size of the input image 18, so that each matrix comprises a number of predetermined values equal to the number of image elements in the input image 18.

In those embodiments, the second sub-step S42 of the fourth step S40, of choosing, for each walker, a distribution value, comprises selecting the predetermined value in the matrix corresponding to the walker and to the coordinates of its current location, i.e. the current interest image element where the walker is located.

In this manner, in those embodiments, if the method 100 is implemented several times on a same input image 18 and using a same initial image element, the distribution value that will be chosen for each walker in the second sub-step S32, will be the same for any implementation of the method 100, so that the selected interest region 20 resulting from the implementation of the method 100 will be substantially the same. As a consequence, in those embodiments, the method 100 is advantageously reproducible.

In some embodiments, the method 100 can be implemented with a bias associated to an interest direction in the input image 18 and/or a corresponding 2D slice of the input image 18.

In other words, in some embodiments, the method 100 advantageously allows favoring an interest direction within the input image to bias and guide the result of the method 100 along this direction. In those embodiments, the displacement probabilities are computed by further taking into account a directional parameter associated with the interest direction. The directional parameter is configured to increase displacement probabilities corresponding to neighboring image elements located in directions within a predefined angle with respect to said direction.

For instance, the directional parameter may be defined based on a function involving a dot product function between the direction specific to the interest region 20 and an outward normal direction of a neighboring element.

Those embodiments are particularly advantageous when the interest region is elongated along a given direction such as blood vessels. Indeed, when the interest region is elongated along an axis, it is advantageous to bias the method 100 so that the N walkers have higher probability to walk paths close to this axis.

For instance, the interest direction can be inputted by a user by interaction with the user graphical interface 2 via the controller 6. The interaction can be a stroke or the definition of two points on the input image 18 defining the interest region.

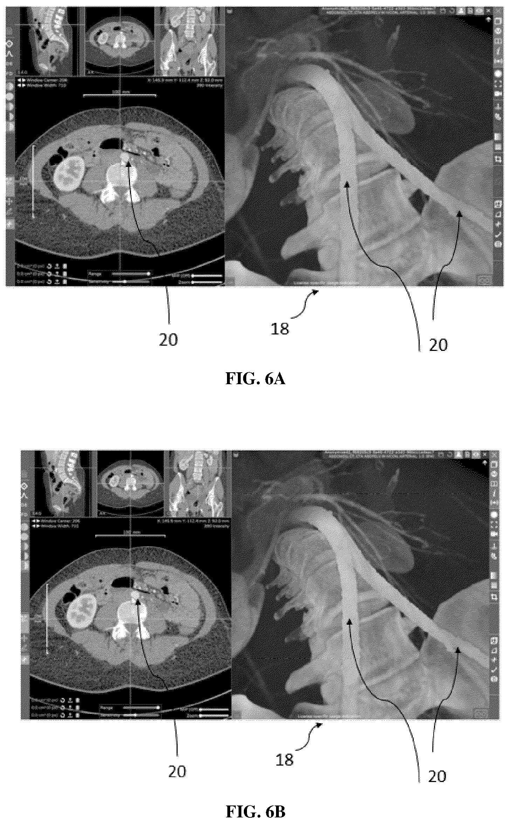

**Figures 6A** and **6B** show an example where the interest region comprises two blood vessels, and the resulting selected portion of the input image 18 was obtained by using the directional parameter previously described.

A use case of those embodiments could serve to determine the centerline of a blood vessel. The centerline is defined as a weighted shortest path traced between both extremal points of a blood vessel. Once the image elements comprised in the blood vessel are determined by the method 100 according to the invention, forming together a selected interest region, image processing functions allow determining the centerline. Notably, the barycenter of consecutive perpendicular cross-sections of the blood vessel can be determined.

In some embodiments, the method 100 advantageously allows displaying the resulting selected interest region on the user graphical interface 2.

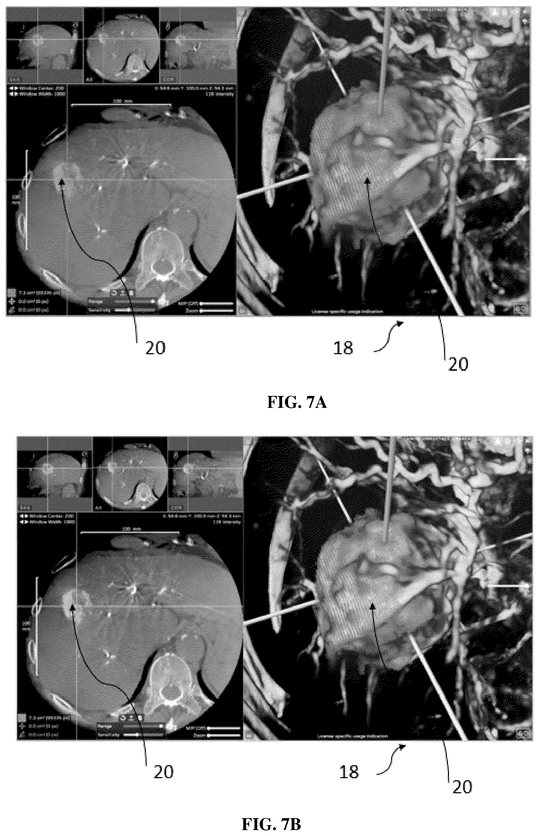

In those embodiments, the method 100 further comprises, after the fourth step S40, a step S50 of displaying the interest region overlaid on the content of the input image 18, or, if case may be, on the displayed 2D slice. For instance, each interest image element can be represented with a predefined displaying characteristic. The same displaying characteristic may be used for all interest image elements. The displaying characteristic may be a uniform grey level for instance, or specific pattern, or a specific displaying color. This displaying step is equivalent to a filling step within the input image. **Figures 7A** and **7B** show a displayed selected interest region resulting from the implementation of the method 100, where the interest image elements composing the selected interest region are represented with the same displaying color. Figure 6 illustrates an embodiment where the input image 18 is a 3D image and a 2D slice of this 3D image is visible on the user graphical interface 2 of the device 1. The selected interest region 20 is displayed overlayed both on the input image 18 and the 2D slice.

In some embodiments, the input image 18 was obtained from an original image of predefined resolution by lowering the resolution of the original image. As a consequence, at least one image of lower resolution corresponding to at least one reduced resolution is obtained. By reduced resolution, it is meant a resolution lower than the predefined resolution. For example, if the original image is of high resolution, the at least one image of lower resolution comprises a first image of medium resolution, the medium resolution being lower than the high resolution, and a second image of lowest resolution, the lowest resolution being lower than the medium resolution. By resolution, it is meant a number of image elements composing a given image. Hence, the at least one image of lower resolution comprises less image elements than the original image.

Each image among the at least one image of lower resolution comprises image elements, each corresponding to a group of image elements of the original image. For instance, each image element of the at least one image of lower resolution corresponds to 8 image elements of the original image. In another example, each image element of the at least one image of lower resolution corresponds to 16 image elements of the original image.

For instance, the feature value of each image element of the at least one image of lower resolution is the average of all image elements of the group of image elements of the original image to which it corresponds.

In some embodiments, the image of lower resolution is obtained by homogeneously applying a transformation to the entire original image. In some other embodiments, the image of lower resolution is obtained by reducing the resolution of only specific subparts of the image, thus obtaining a multi-resolution image. This multi-resolution image can be in the form of an octree or a Voronoi tessellation, for example.

In those embodiments, the method 100 further comprises, before the step of receiving a selection S10, a step of receiving, from a user, a selected resolution corresponding to one among said predefined resolution and said at least one reduced resolution. The input image 18 is then the image among the original image and the at least one image of lower resolution corresponding to the selected resolution. The selected interest region 20 at the end of the iteration process corresponds to an ensemble of image elements of the original image corresponding to the union of all groups of image elements of the original image corresponding to all image elements of the selected interest region 20.

In those embodiments, the method 100 may further comprise displaying the ensemble overlaid on the original image (i.e. a superposition of the ensemble with the original image).

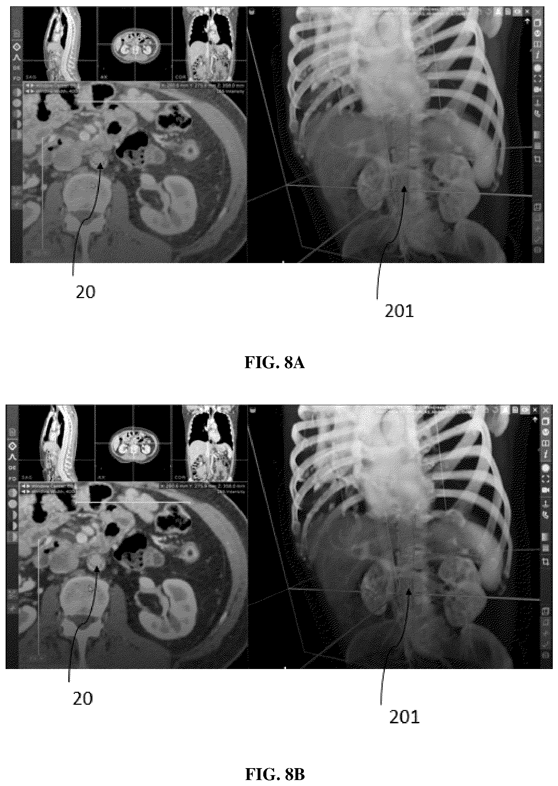

**Figures 8A** and **8B** represent a view of the user graphical interface 2 with, on the left hand side, the input image 18 with the selected interest region 20, and the right hand side, the corresponding original image with the corresponding ensemble 201 obtained with the previous embodiments.

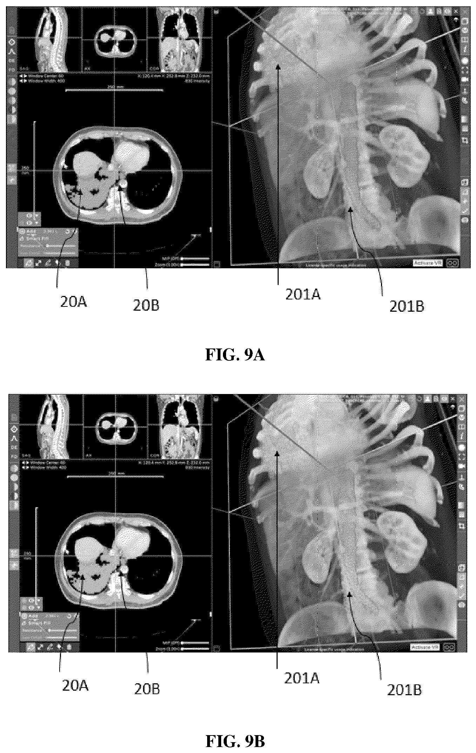

Advantageously, the method 100 can be implemented several times, so as to obtain several selected interest regions from a same input image 18 and its corresponding original image. **Figures 9A** and **9B** represent a view of the user graphical interface 2 with, on the left hand side, the input image 18 with a first selected interest region 20A and a second selected interest region 20B, and the right hand side, the corresponding original image with a first ensemble 201A corresponding to the first selected interest region 20A and a second ensemble 201B corresponding to the second selected interest region 20B.

In some embodiments, when, for a current iteration of the iteration process implemented for the method 100, and for a given walker, the distribution value chosen at step S42 leads to a neighboring image element already included in the ensemble of interest image elements as obtained at the current iteration, the method 100 further comprises an additional step of penalizing the distribution value. In other words, the distribution value is not taken into account, and the current iteration ends for the given walker without adding any additional neighboring element.

In some embodiments, the method 100 is further configured to determine a boundary of the selected interest region. In those embodiments, the method 100 further comprises, after the fourth step S40, a step S60 of determining boundary images elements 22 of the selected interest region. This determining step comprises determining the interest image elements presenting at least one face, when the input image is a 3D image, or at least one edge, when the input image is a 2D image, that is not abutted to another interest image elements.

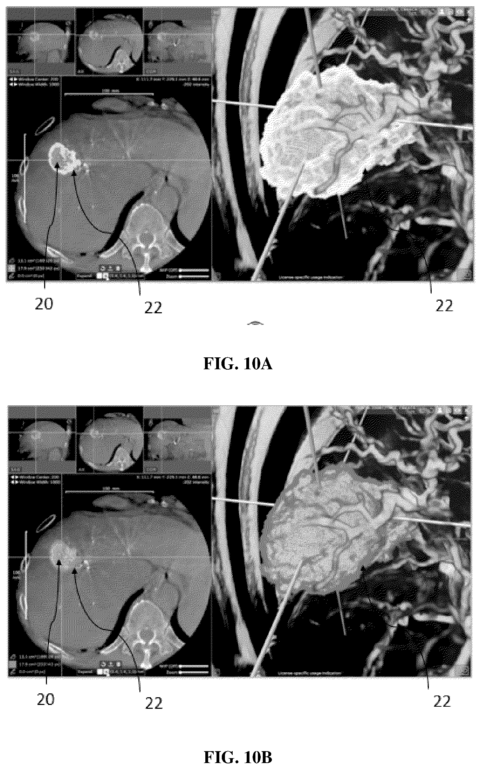

In those embodiments, the method 100 may further comprise a step of displaying the boundary image elements on the input image. **Figures 10A** and **10B** represent a view of the user graphical interface 2 with both displayed, with different displaying colors, the selected interest region 20 and the boundary image elements 22.

In some embodiments, the method 100 is further configured for determining a so-called smart boundary of the selected interest region. By smart boundary, it is meant a smooth boundary. It is indeed possible that the resulting selected region presents an original rough boundary with bumps and holes. To determine the so-called smart boundary, several options are possible. Two options are described starting from the result of the step S60 previously described.

The first option consists of implementing a dilatation step on the result of step S60. In other words, the step S60 is followed by a step of extending the selected region of interest image elements.

The second option consists of implementing a smoothing step. For instance, the smoothing step comprises applying a Laplacian (or other) smoothing operator to the result of the step S60.

In some embodiments, the method 100 further comprises a step of determining a volume of the selected interest region. For instance, the number of interest image elements in the selected interest region is counted and is multiplied by a volume value of an image element (e.g., voxel volume).

In some embodiments, the method 100 further comprises a step of determining an outer surface of the selected interest region. For instance, the number of interest image elements in the selected interest region is counted and is multiplied by a surface value of an image element.

In some embodiments, the method 100 is further configured to allow for freehand tagging of the selected interest region. By freehand tagging, it is meant manually modifying or complementing, for instance by the user 4, the selected interest region 20. Advantageously, in those embodiments, it is possible to annotate the selected interest region 20.

In those embodiments, the method 100 further comprises, following the fourth step S40, a sub-step S71 of receiving a click or stroke on at least a 2D slice of the input image 18 when the input image 18 is a 3D image, or on the input image 18 when the input image is a 2D image.

For instance, the click or the stroke can be an input from the user 4 via the controller 6. The click can define a line or a point on the at least a 2D slice or on the input image 18. The stroke can define a line, i.e. a path, on the at least a 2D slice or on the input image 18.

After the sub-step S71 of receiving a click or a stroke, the method 100 further comprises a sub-step S72 of determining additional interest image elements 23 based on the click or the stroke.

For instance, the click or the stroke can define a working volume. The working volume is determined based on, either the location of the click in the input image 18, or a shape of the stroke and a working thickness. In the case of a click, the working volume would be a sphere of center the location of the click and of radius the working thickness. In the case of the stroke, the working volume would be defined by all the image elements located at a distance less or equal to the working thickness of one point on the path defined by the stroke. The working volume so defined is then determined as additional interest image elements 24.

After the sub-set S72 of determining additional interest image elements forming together an ensemble of additional interest image elements, the method 100 further comprises a sub-step S73 of displaying the ensemble of additional interest image elements 24 on the input image 18 and/or the 2D slice.

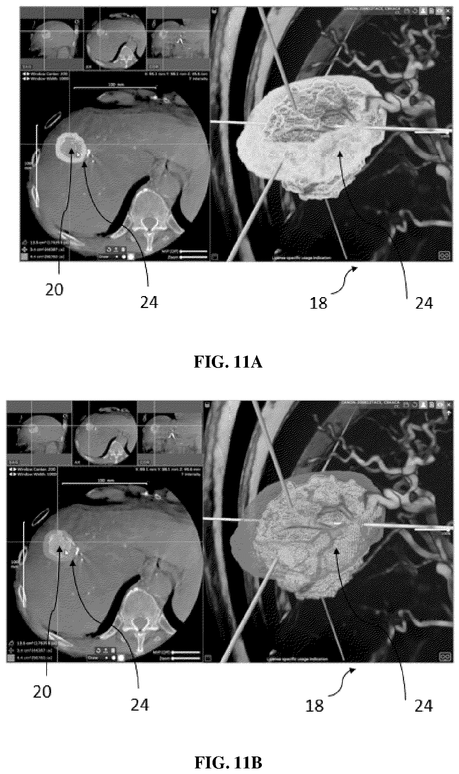

**Figures 11A** and **11B** show an example of an ensemble of additional interest image elements 23 displayed both on the input image 18, a 3D image, and on a corresponding 2D slice. On **Figures 11A** and **11B****,** the ensemble of additional interest image elements 24 surrounds the selected interest region 20 and is displayed with a different displaying color.

In another example, when the selected interest region is not convex, for instance, the selected interest region comprises holes, the ensemble of additional interest image elements may serve to fill those holes.

In some embodiments, the selected interest region is used as an input for an algorithm configured to optimize parameters of a ray-based algorithm to create a volume rendering of the image. Ray-based rendering algorithms typically associate an opacity to each voxel of a 3D image using a transfer function, to simulate the propagation of light and insodoing reconstruct the 3D appearance of the original subject (e.g. patient) captured by the 3D imaging device (e.g. MRI, CT). In order to enhance the visibility of the interest region in a volume rendering of the image, a higher opacity could for instance be assigned to the voxels of the interest region. In order to hide the interest region in a volume rendering of the image, a low opacity could for instance be assigned to the voxels of the interest region, making them fully or partially transparent. Alternatively, the distribution of the feature inside the interest region could be analyzed so as to create specific transfer functions enhancing the visibility of voxels with similar features throughout the image.

In some embodiments, the method 100 further comprises a step of exporting the selected interest region as a binary mask. The binary mask can be used for subsequent tasks such as the creation of a mesh and an associated 3D model (tessellation). In combination with the original image, binary masks can be used as semantic labels to create educational contents or constitute databases to create automatic labeling machine learning algorithms.

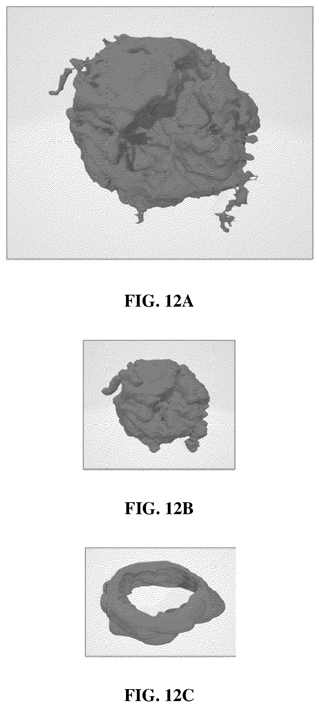

In some embodiments, the method 100 further comprises a step of processing the selected interest region to create a 3D model file. For instance, a format of the 3D model file may be STL, OBJ or the like. **Figures 12** **A, 12 B** and **12 C** shows examples of exported volumes resulting from the implementation of the method 100, respectively a model of a selected interest region, of boundary elements of a selected interest region and of additional interest image elements obtained by freetagging. Those models can be interestingly used for manipulation and display in various software applications, including mobile phone applications, web-based applications, applications working on autonomous stereoscopic displays, 3D industrial design software. They can be used as such or after some post-processing to 3D print real-world objects.

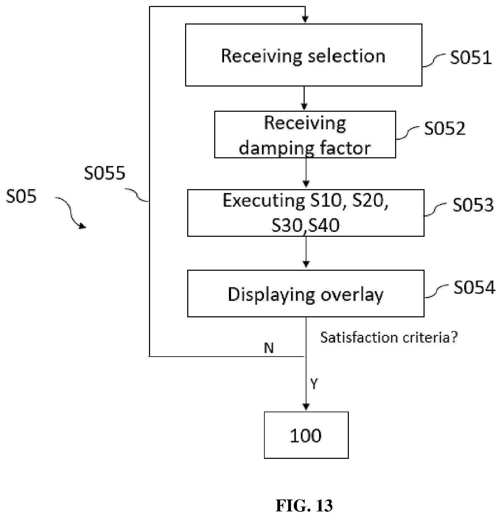

As previously evoked, in some embodiments, the damping factor can be determined by an optimization process implemented during an additional preliminary step S05 illustrated on **Figure 13****.**

In those embodiments, the additional preliminary step comprises:
- S051) receiving a selection of an initial image element;
- S052) receiving a value of the damping factor;
- S053) executing the steps S10, S20, S30, S40, with a number N0 of walkers that is equal to or reduced from the nominal number of walkers. The nominal number of walkers is the number wished to be used in the main implementation of the method 100, that is, the implementation that will provide a preview of the final result for the selection of the interest region. For example, N0 is a positive natural number that may be chosen less than or equal to the nominal number of walkers. Advantageously, this non-persisten previewing the number of walkers using a less than or equal to N0 of walkers at step S051 has an accelerated computation time in comparison to the persistent calculation;
- S054) displaying an overlay of the selected interest region resulting from S053);
- S055) repeating S051), S052), S053) and S054) until a satisfaction criteria is met.

Advantageously, the additional preliminary step is implemented in a pre-visualization phase, aiming at achieving a user satisfaction criteria relating to a visual appreciation of the result by the user.

In a variant embodiment, step S053) comprises executing the steps S10, S20, S30, S40, not with a number N0 of walkers that is reduced, but with a reduced number of iterations in the loop of S40. By reduced, it is meant that the reduced number of iterations is smaller than the number of iterations that is wished to be used in step S40 of the main implementation of the method 100, that is, the implementation that will provide with a final result for the selection of the interest region. In other words, in step S053), a reduced number of iterations in the loop of S40 is used. When the satisfaction criteria is met, the main implementation of the method 100 is carried out with the wished number of iterations.

Examples of applications of the method 100 are the following.

The method can be used for tagging an entire blood vessel by initiating the method 100 from different initial elements along the vessel. The tagged vessel can be transformed into a 3D object file to be displayed in an augmented reality headset and overlaid to the real body of a patient during surgery or to a mannequin for surgical education.

The method can be used to tag and estimate the volume of a tumor, by starting the method 100 with an initial image element inside the tumor, then editing the interest region manually to cover all the voxels of the tumor then retrieving the volume of the interest region.

## Claims

1. A computer-implemented method for selecting an interest region in an input image (18) comprising image elements, each of which being associated to at least one feature value, said method comprising:
- receiving (S10) a selection of at least one initial image element comprised in said interest region;
- initializing (S20) an ensemble of interest image elements associated to said interest region (20) as comprising at least said initial image element;
- defining (S30) a number of N walkers and initializing each walker among said N walkers by associating it to a current interest image element being said initial image element;
- selecting (S40) said interest region (20) in said image for each walker among said N walkers, by iterating until satisfaction of at least one predefined stopping criteria:
• computing (S41) a plurality of displacement probabilities, each displacement probability being computed for a displacement from the current interest image element to each neighboring image element, each displacement probability depending on the feature value of said current interest image element, the feature value of said neighboring image element and a damping factor,
wherein said plurality of displacement probabilities defines a cumulative distribution function taking distribution values within a total interval, each neighboring image element being associated with an interval comprised in said total interval,
• choosing (S42) a distribution value within said total interval,
• selecting (S43) the neighboring image element associated with the interval comprising said chosen distribution value and moving said walker to said selected neighboring image element so that the current interest image element of said walker is said selected neighboring image element,
• adding (S44) to the ensemble of interest image elements said selected neighboring image element,
so that the selected interest region (20) is defined as the ensemble of interest image elements obtained when said at least one predefined stopping criteria is satisfied, wherein the damping factor is configured to determine dimensions of said interest region (18).

2. The method according to claim **1,** wherein said damping factor is set by a user.

3. The method according to claim **1,** wherein said damping factor is determined by an optimization process.

4. The method according to any one of the preceding claims, wherein said plurality of displacement probabilities are computed by further taking into account a directional parameter associated with a direction, said directional parameter being configured to increase displacement probabilities corresponding to neighboring image elements located in directions within a predefined angle with respect to said direction.

5. The method according to any one of the preceding claims, wherein said plurality of displacement probabilities are defined by: ${P}_{\vec{d}} \left(x, y, z\right) = f \left(θ\right) {e}^{β \left({θ}_{1},{θ}_{2},..{θ}_{m}\right) {\left({∇}_{\vec{d}}\left(ψ\left(I\left(x, y, z\right)\right)\right)\right)}^{α}}$ wherein:
*̅d̅*̅ is a direction of the step of the walk,
*P_{d̅}* is a probability of transition of a walker in the direction *̅d̅*̅, *θ*₁, *θ*₂ , .. *θₘ* are hyperparameters,
*f* is a normalization function depending on *θ*₁, *θ*₂ ,.. *θₘ*,
*β* is the damping factor depending on *θ*₁, *θ*₂ ,.. *θₘ* ,
*I*(*x, y, z*) is the intensity feature of the image element (x,y,z),
*ψ* is a function depending on the intensity feature *I*(*x, y, z*),
*α* is an exponent.

6. The method according to any one of the preceding claims, wherein, for each walker, said distribution value is chosen randomly.

7. The method according to any one of claims 1 to 5, further comprising providing a table of predetermined values or a pseudo-random deterministic random-number generator,
wherein, for each walker displacement, choosing a distribution value within said total interval comprises choosing a corresponding predetermined value from said table of predetermined values or using said pseudo-random deterministic random-number generator.

8. The method according to any one of the preceding claims, wherein said input image (18) was obtained from an original image of predefined resolution by reducing the resolution of said original image or of parts of said original image, so as to obtain at least one image of lower resolution having reduced resolution, and so that each image element of said at least one image of lower resolution corresponds to a group of image elements of said original image,
wherein said at least one image of lower resolution is defined as input image (18), so that said selected interest region (20) corresponds to an ensemble of image elements of said original image corresponding to the union of all groups of image elements of said original image corresponding to all image elements of said selected interest region (20),
optionally, the method further comprising displaying said ensemble overlaid on said original image.

9. The method according to any one of the preceding claims, further comprising:
- determining a subset of interest image elements in said ensemble of interest image elements that comprise at least one neighboring image element outside said ensemble of interest image elements,
- extending or shrinking the selected interest region (20) by adding said neighboring image elements or removing said subset of interest image elements.

10. The method according to any one of the preceding claims, further comprising:
- counting a number of interest image elements within said ensemble of interest image elements,
- determining a surface or a volume of said interest region (20) based on said number of interest image elements.

11. The method according to any one of the preceding claims, wherein said interest region (20) is used as an input for an algorithm configured to optimize parameters of a ray-based algorithm to create a volume rendering of the image.

12. The method according to any one of the preceding claims, further comprising saving said interest region (20) as a binary mask.

13. The method according to any one of the preceding claims, further comprising exporting said interest region (20) to create a 3D model file, for instance STL, OBJ or the like.

14. The method according to any one of the preceding claims, wherein said at least one predefined stopping criteria comprises achieving a number of iterations, said method comprising:
a) obtaining a test number of walkers or a test number of iterations and optionally an updated damping factor,
wherein said test number of walkers is equal to or inferior to said number of walkers and/or said test number of iterations is inferior than said number of iterations,
b) implementing steps (S10), (S20), (S30) and (S40) with either said test number of walkers or by iterating step (S40) a number of times equal to said test number iterations, with said updated value of damping factor being used as said damping factor, in a non-persistent fashion where the interest image elements are not saved,
c) displaying as an overlay to the image in real time as a user changes at step (S10) the selected initial image element through a user interface displaying the input image (18) and a selection tool,
d) repeating a), b) and c) until a satisfaction criteria is met.

15. A computer program product comprising instructions which, when the program is executed by a computer, cause the computer to carry out the method according to any one of claims 1 to 14.
